# EUROPEAN PATENT APPLICATION

(11) **EP 1 643 752 A1**
(43) Date of publication of application: **05.04.2006**
(21) Application number: 05021497.2
(22) Date of filing: 30.09.2005
(51) Int. Cl.: H04N 1/21

(54) **Method and apparatus for storing image files of mobile communication terminal**

(30) Priority: 02.10.2004 KR 2004078533
(71) Applicant: LG Electronics Inc., Yongdungpo-gu Seoul (KR)
(72) Inventor: Kim, Jun-Hyung, Dongjak-Gu Seoul (KR); Jung, Seok-Woo, Nam-Gu Incheon (KR); Shin, Bum-Jea, Anyang Gyeonggi-Do (KR); Lim, Byung-Chun, Geumcheon-Gu Seoul (KR); Hwang, Jae-Moon, Gangseo-Gu Seoul (KR)
(74) Representative: von Hellfeld, Axel

(57) **Abstract**

A method for storing an image file of a mobile communication terminal, the method includes: naming an image file based on one or more preset options; and storing the named image file in a storage location selected by a user.

## Description

### BACKGROUND OF THE INVENTION

### 1. Field of the Invention

The present invention relates to a mobile communication terminal, and particularly, to a method for storing image files of a mobile communication terminal capable of efficiently categorizing and storing image files generated by capturing an object through a camera.

### 2. Description of the Related Art

In general, a mobile communication terminal is designed to allow a user to place wireless calls to another party and provide a wireless connection anytime and anywhere by a switching control of an MSC (Mobile Switching Center) while moving in a service region formed by a BS (Base Station), such that data communications using symbols, numbers, characters, or the like, and multimedia communications including images and videos as well as voice communications can be performed. Research is actively ongoing to develop mobile communication terminals having a large display device and a camera to capture a image.

The mobile communication terminal provides not only a communication function but also various additional functions that improve user convenience and also improves the usefulness of communications. In particular, among the additional services the user preference is relatively high for a camera function that is used for capturing and storing images of an object.

The mobile communication terminal automatically names an image file generated after capturing an object through the camera by using a date and a number. Specifically, the mobile communication terminal automatically gives the image file a name like '05420_001'. Here, '050420' indicates a current date which is April 20, 2005, and '001' is a serial number. A serial number of each image file is incremented by one.

However, the automatic naming of the mobile communication terminal only using the date and the number cannot inform a user of the purpose of the captured image file.

Also, because the mobile communication terminal stores the named image file in only one storage location, the generated image file cannot be categorized according to its purpose.

As described so far, the related art mobile communication terminal cannot efficiently categorize image files generated by capturing objects through a camera because it automatically names the image files using only dates and numbers and stores the named image files in only one storage location.

### BRIEF DESCRIPTION OF THE INVENTION

Therefore, an object of the present invention is to provide a method for storing an image file of a mobile communication terminal capable of efficiently categorizing and storing an image file generated by capturing an object through a camera, by naming the image file based on one or more preset options and storing the named image file in a storage location selected by a user.

To achieve these and other advantages and in accordance with the purpose of the present invention, as embodied and broadly described herein, there is provided a method for storing an image file of a mobile communication terminal, the method comprising: naming an image file based on one or more preset options; and storing the named image file in a storage location selected by a user.

To achieve these and other advantages and in accordance with the purpose of the present invention, as embodied and broadly described herein, there is provided a method for storing an image file of a mobile communication terminal, the method comprising: checking whether a name of an image file which is displayed based upon one or more preset options should be modified; naming the image file according to information input by a user when the name of the image file is modified; and storing the named image file in a preset storage location.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a flow chart that illustrates an exemplary method for storing an image file of a mobile communication terminal in accordance with the present invention;
Figure 2 is a flow chart that illustrates an exemplary method for naming the image file of Figure 1 in more detail; and
Figure 3 is a flow chart that illustrates an exemplary method for determining a storage location for the image file of Figure 1.

### DETAILED DESCRIPTION OF THE INVENTION

Reference will now be made in detail to the preferred embodiments of the present invention, examples of which are illustrated in the accompanying drawings.

One exemplary embodiment of a method for storing image files of a mobile communication terminal capable of efficiently categorizing and storing image files generated by capturing an object through a camera, by naming the image files based on one or more preset options and storing the named image files in a storage location selected by a user, will now be described with reference to accompanying drawings.

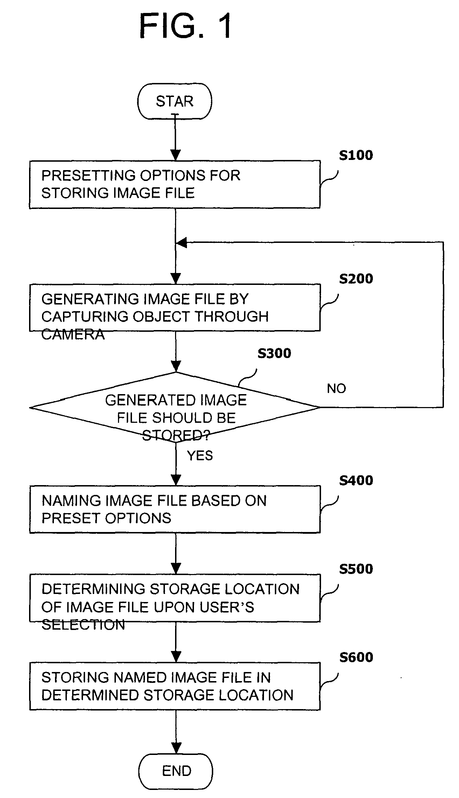

Figure 1 is a flow chart that illustrates an exemplary method for storing an image file of the mobile communication terminal in accordance with the present invention.

As shown in Figure 1, the method for storing an image file of the mobile communication terminal in accordance with the present invention may include: presetting options for storing image files (S100); generating an image file by capturing an object through a camera (S200); checking whether the generated image file should be stored (S300); naming the image file based on the preset options when the generated image file is stored (S400); determining a storage location for storing the named image file upon the user's selection (S500); and storing the named image file in the determined storage location (S600).

Here, if it is determined that the generated image file does not need to be stored, the generated image file can be deleted.

The method for storing an image file of the mobile communication terminal in accordance with the present invention will now be described in more detail.

First, the mobile communication terminal presets options for storing image files generated by capturing an object through a camera (S100). Namely, the mobile communication terminal can preset one or more options for naming the image file upon the user's selection, and can also preset a storage location for storing the image file as a default.

For example, the mobile communication terminal provides options, such as 1) theme, 2) date, 3) day, 4) size, 5) number, and the like, for determining names to be given to image files which will be generated, such that the user can select at least one of the provided options.

Here, if the user selects 1) theme, 2) date, and 5) number from the provided options, the mobile communication terminal can give an image file a name like 'SEA_050420_001'. Here, the 1) theme may be directly inputted by the user. Various options may be easily added besides the aforementioned options, and various kinds of names can be given upon the user's selection.

Then, the mobile communication terminal generates an image file (S200) after capturing an object through a camera, and checks whether the user wants to store the generated image file (S300). If the user chooses not to store the image file, the mobile communication terminal deletes the image file and may keep capturing other objects through the camera.

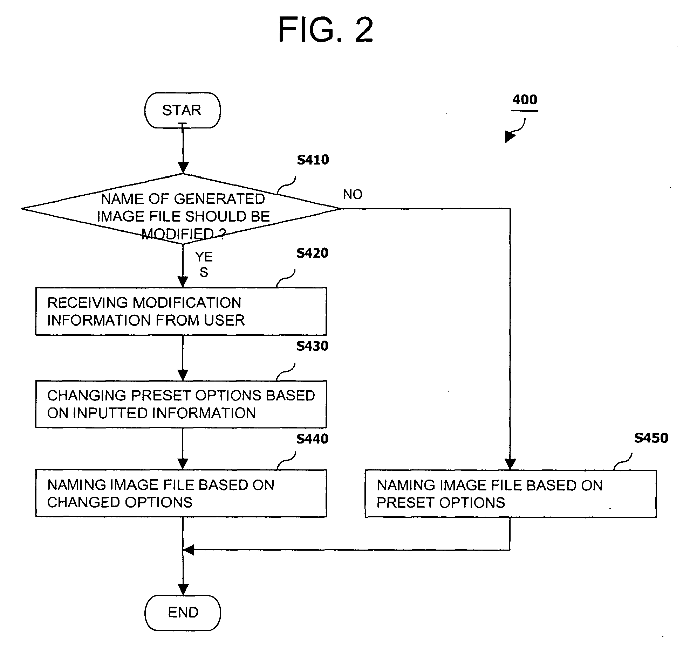

When storing an image file, the mobile communication terminal displays a name of the image file, which is determined based on the preset options, through a display device. The method for naming the image file will now be described with reference to Figure 2.

Figure 2 is a flow chart that illustrates an exemplary method for naming the image file of Figure 1.

As shown in Figure 2, the method for naming an image file of the communication terminal in accordance with the present invention may include: checking whether the displayed name of the image file should be modified (changed) (S410); receiving information for the modification from the user when the image file is modified (420); modifying preset options based on the inputted information (S430); naming the image file based on the modified options (S440).

Here, if the name of the generated image file does not need to be modified, the mobile communication terminal gives the image file the name which has been displayed based on the preset options (S450).

The method for naming the image file of the mobile communication terminal in accordance with the present invention will now be described.

First, the mobile communication terminal displays the name of the generated image file based on the preset options so as to check whether the displayed name of the image file should be modified by the user (S410). If the displayed name of the image file does not need to be modified, the mobile communication terminal determines the displayed name of the image file as a name of the generated image file, thereby giving the generated image file the determined name (S450).

When modifying the name of the generated image file, the user directly modifies the displayed name of the image file (S420). For example, if the displayed name of the image file is 'SEA_050420_001', the user modifies the 'SEA' part into 'SKY', such that the mobile communication terminal can modify the displayed name of the image file into 'SKY_050420_001'.

The mobile communication terminal modifies the preset options based on the modified information (S430). Namely, as the mobile communication terminal recognizes the fact that the theme of the image file has been changed through the name 'SKY_050420_001), the preset options are thereby modified.

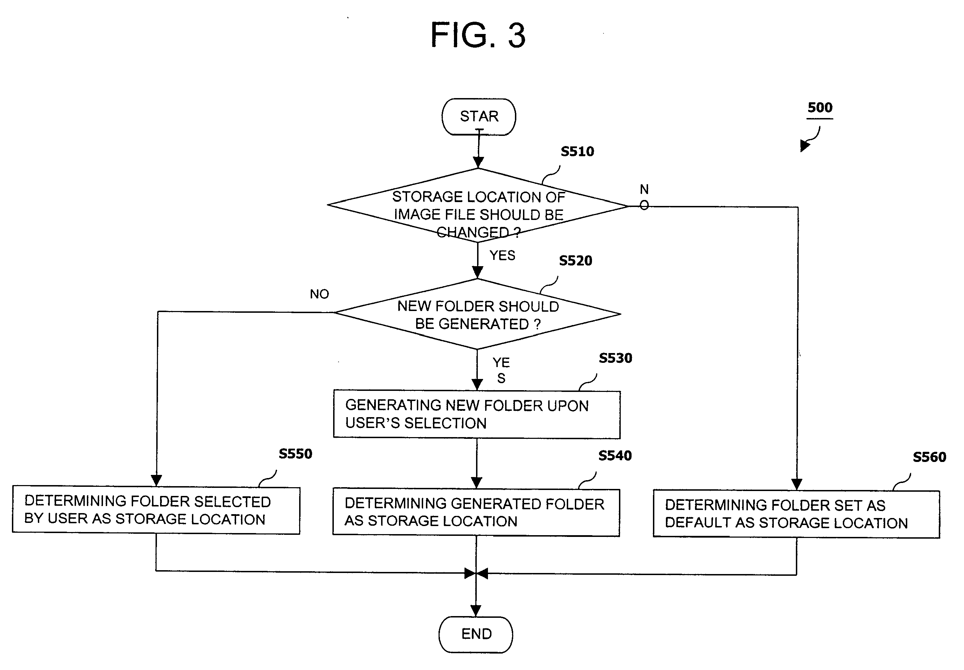

Thus, the mobile communication terminal names the generated image file as 'SKY _050420_001' based on the modified options (S440). The mobile communication terminal determines a storage location for storing the named image file (S500). The method for determining the storage location of the named image file will now be described with reference to Figure 3.

Figure 3 is a flow chart that illustrates an exemplary method for determining the storage location of the image file.

As shown, the method for determining the storage location of the image file of the mobile communication terminal in accordance with the present invention may include: checking whether a storage location of the named image file should be changed (S510); checking whether a new folder should be generated when the storage location of the image file is changed (S520); generating a new folder upon the user's selection if the new folder should be generated (S530); and determining the generated folder as a storage location of the image file (S540).

Here, if the storage location of the named image file is not changed, the mobile communication terminal determines a folder, which has been set as the default, as a storage location (S560). If the new folder is not generated, a folder selected from existing folders by the user is determined as a storage location (S550).

The method for determining the storage location of the image file of the mobile communication terminal in accordance with the present invention will now be described in more detail.

First, the mobile communication terminal checks whether a storage location of the named image file should be changed (S510). If the storage location of the image file is not changed, the mobile communication terminal determines a folder, which has been set as the default, as a storage location of the image file (S560). If the storage location of the image file is changed, the mobile communication terminal checks whether a new folder should be generated (S520).

If a new folder does not need to be generated, the mobile communication terminal selects an existing folder, thereby determining the selected folder as a storage location of the image file (S550).

In contrast, if a new folder should be generated, the mobile communication terminal generates a new folder upon the user's selection (S530), thereby determining the generated new folder as a storage location of the image file (S540).

Finally, the mobile communication terminal stores the named image file in the determined storage location of the image file, namely, in the folder (S600). Namely, as the mobile communication terminal changes the name of the image file and its storage location upon the user's section, the generated image file can be systematically categorized according to its purpose.

Also, in the method for naming the image file of the mobile communication terminal in accordance with the present invention, some image files are selected from pre-stored image files so that those selected image files are changed individually, or some folders are selected from folders storing the image files so that image files stored in those selected folders can be collectively changed.

The present invention provides a mobile communications terminal comprising: a user interface having at least a keypad and display screen to allow inputting and outputting of information for a user; a mobile communications terminal embedded camera used to obtain image data; a memory used to store the image data, and to store options that provide recommended labels for the image data to be stored; and a processor cooperating with the user interface, the camera, and the memory to perform the steps of, providing the options via the user interface to allow user selection thereof after the image data is obtained from the camera, and storing the image data in a hierarchical manner in the memory according to the user selected options to facilitate user management of the image data.

The image data may comprise photographs, video clips or other image capture formats. The options may include different types of descriptive information that are selectable for each type of image data to be stored as an image file. The selected recommended label can be automatically attached to the image file or the user modifies a particular recommended label upon selection from the options and the modified label is attached to the image file. Also, image files having a common label or common descriptive information can be stored together within one or more separate folders of the memory to achieve the hierarchical manner of storage.

As described so far, the method for storing an image file of the mobile communication terminal in accordance with the present invention is advantageous in that an image file generated by capturing an object through a camera can be efficiently categorized and stored such that the image file is named based on one or more preset options and the named image file is stored in a storage location selected by a user.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for storing an image file of a mobile communication terminal, the method comprising:
naming an image file based on one or more preset options; and
storing the named image file in a storage location selected by a user.

2. The method of claim 1, wherein if the user does not select the storage location, the named image file is stored in a storage location set as a default.

3. The method of claim 1, wherein the preset option comprises at least one of a theme, a date, a day, a size and a number of the image file.

4. The method of claim 3, wherein the number is a serial number according to the theme.

5. The method of claim 1, wherein the image file is a video image file or a still image file.

6. A method for storing an image file of a mobile communication terminal, the method comprising:
checking whether a name of an image file which is displayed based upon one or more preset options should be modified;
naming the image file according to information input by a user when the name of the image file is modified; and
storing the named image file in a preset storage location.

7. The method of claim 6, wherein the preset option comprises at least one of a theme, a date, a day, a size and a number of the image file.

8. The method of claim 7, wherein the number is a serial number according to the theme.

9. The method of claim 6, wherein the image file is a moving image file or a still image file.

10. The method of claim 6, wherein the naming of the image file comprises:
receiving from the user, modification information when the name of the image file is modified;
changing the preset option based on the received information; and
naming the image file based on the changed option.

11. The method of claim 6, wherein, further comprising:
giving the image file the name displayed based on the preset option if the name of the image file is not modified.

12. The method of claim 6, wherein the storing of the named image file in the preset storage location comprises:
checking whether a storage location of the named image file should be changed;
determining a folder selected by the user as a storage location when the storage location of the image file is changed; and
storing the named image file in the determined storage location.

13. The method of claim 12, further comprising:
determining a folder, which has been set as a default, as the storage location if the storage location of the image file is not changed.

14. The method of claim 12, wherein the determining of the storage location comprises:
checking whether a new folder should be generated when the storage location is changed;
generating the new folder upon the user's selection; and
setting the generated folder as the storage location.

15. The method of claim 14, further comprising:
selecting one from existing folders if the new folder is not generated, and
determining the selected folder as the storage location.

16. A mobile communications terminal comprising:
a user interface having at least a keypad and display screen to allow inputting and outputting of information for a user;
a mobile communications terminal embedded camera used to obtain image data;
a memory used to store the image data, and to store options that provide recommended labels for the image data to be stored; and
a processor cooperating with the user interface, the camera, and the memory to perform the steps of,
providing the options via the user interface to allow user selection thereof after the image data is obtained from the camera, and
storing the image data in a hierarchical manner in the memory according to the user selected options to facilitate user management of the image data.

17. The apparatus of claim 16, wherein the image data comprises photographs, video clips or other image capture formats.

18. The apparatus of claim 16, wherein the options include different types of descriptive information that are selectable for each type of image data to be stored as an image file.

19. The apparatus of claim 18, wherein the selected recommended label is automatically attached to the image file or the user modifies a particular recommended label upon selection from the options and the modified label is attached to the image file.

20. The apparatus of claim 18, wherein image files having a common label or common descriptive information are stored together within one or more separate folders of the memory to achieve the hierarchical manner of storage.
